# FASCICULE DE BREVET EUROPEEN

(11) **EP 0 480 781 B1**
(45) Date de publication et mention de la délivrance du brevet: **19.07.1995**
(21) Numéro de dépôt: 91402348.6
(22) Date de dépôt: 02.09.1991
(51) Int. Cl.: B25B 27/14

(54) **Procédé et dispositif de pose d'un filet rapporté hélicoidal dans une ouverture taraudée de grand diamètre et utilisation de ce procédé et de ce dispositif**
Verfahren und Werkzeug zum Anbringen von Gewindeeinsatz
Method and tool for installing a threaded insert

(30) Priorité: 08.10.1990 FR 9012363
(43) Date de publication de la demande: 15.04.1992
(73) Titulaire: FRAMATOME, 92400 Courbevoie (FR)
(72) Inventeur: Dworaczek, Jean-Paul, F-71670 Le Breuil (FR); Grypczynski, Daniel, F-69006 Lyon (FR)
(74) Mandataire: Bouget, Lucien

(56) Documents cités:
- FR-A- 469 663
- GB-A- 1 094 772
- GB-A- 1 603 117
- GB-A- 2 202 471
- US-A- 3 348 293

## Description

L'invention concerne un procédé et un dispositif de pose d'un filet rapporté hélicoïdal dans une ouverture taraudée de grand diamètre pour effectuer la réparation du taraudage de l'ouverture, cf. par example US-A-3 348 293.

Les cuves de réacteur nucléaire à eau sous pression comportent une bride supérieure sur laquelle est fixé le couvercle de la cuve, par l'intermédiaire de goujons de grand diamètre qui sont vissés à l'intérieur d'ouvertures taraudées usinées dans la bride de cuve et qui assurent une fermeture étanche et un maintien du couvercle de la cuve dans laquelle l'eau de refroidissement du réacteur à très forte pression est amenée à circuler pendant le fonctionnement du réacteur.

Lors des opérations de démontage et de remontage du couvercle de la cuve, le taraudage des ouvertures de la bride est susceptible de subir une certaine usure et des détériorations, de sorte que l'efficacité du serrage du couvercle de la cuve peut devenir insuffisante.

De plus, le vissage d'un goujon peut s'accompagner d'un grippage à l'intérieur de l'ouverture taraudée. Pendant le vissage, un copeau de métal arraché au taraudage de l'ouverture peut se former en fond de filet et bloquer le goujon par grippage.

Il est alors nécessaire de sectionner le goujon et de l'extraire par usinage, cette opération étant très longue et délicate à réaliser.

On a proposé des procédés de réparation du taraudage d'une ouverture de grand diamètre, lorsque le filet de ce taraudage présente une certaine usure ou des détériorations.

En particulier, on a proposé de fixer dans l'ouverture, un filet rapporté de forme hélicoïdale.

Dans le brevet FR-A-80-01461, on décrit un procédé de réparation d'un taraudage de grand diamètre qui consiste à usiner des gorges dans la paroi de l'ouverture taraudée puis à mettre en place un filet rapporté en plusieurs secteurs dans l'ouverture taraudée. Le filet rapporté est monté sur une assise clavetée au fond du taraudage, si bien que le montage du filet rapporté ne nécessite pas l'utilisation d'outillages spéciaux. Cependant, la mise en oeuvre de ce procédé est très longue, ce qui risque d'augmenter sensiblement le temps d'arrêt du réacteur nucléaire.

On connaît également un outillage qui permet de mettre en place un filet rapporté de diamètre moyen, à l'intérieur d'une ouverture taraudée. Cet outillage est constitué par une tige qui comporte, à son extrémité supérieure, une poignée de manoeuvre et, à son extrémité inférieure, une fente transversale de direction axiale.

La fente de l'outil est susceptible de coopérer avec un brin d'entraînement du filet rapporté, de manière à introduire ce filet rapporté, par vissage dans l'ouverture taraudée dont on effectue la réparation.

Après avoir effectué le vissage complet du filet rapporté et le retrait de l'outillage, on assure la rupture du brin d'entraînement en utilisant un outillage approprié. Le filet rapporté est prêt à recevoir une vis ou goujon d'assemblage sans qu'aucune opération complémentaire ne soit nécessaire.

Dans le susmentioné US-A-3.348.293, on a décrit un dispositif de pose d'un filet rapporté comportant un tambour ayant une surface comportant un filetage sur lequel on enroule le filet rapporté et un anneau de centrage taraudé qui peut être engagé dans la partie d'entrée de l'ouverture taraudée dans laquelle on pose le filet rapporté. L'anneau de centrage dont le taraudage se trouve dans le prolongement de l'ouverture taraudée assure le guidage du tambour et du filet rapporté qui sont vissés à l'intérieur de la bague, puis à l'intérieur de l'ouverture taraudée.

Un tel outillage et son procédé d'utilisation ne permettent pas à eux seuls d'assurer une fixation efficace d'un filet rapporté à l'intérieur d'une ouverture taraudée de grand diamètre dont on effectue la réparation en utilisant le filet rapporté.

Le but de l'invention est donc de proposer un procédé de pose d'un filet rapporté hélicoïdal dans une ouverture taraudée de grand diamètre, pour effectuer la réparation du taraudage de l'ouverture, dans lequel on introduit par vissage le filet rapporté dans l'ouverture taraudée, enroulé sur une partie filetée de la surface d'un tambour dont on assure le vissage à l'intérieur d'un anneau de centrage taraudé engagé dans la partie d'entrée de l'ouverture taraudée, de manière à constituer un prolongement du taraudage de l'ouverture, ce procédé d'une mise en oeuvre simple et rapide permettant de réaliser une fixation efficace et résistante du filet rapporté, de sorte qu'on améliore de manière sensible le comportement mécanique de l'assemblage vissé utilisant l'ouverture taraudée après sa réparation.

Dans ce but, on effectue ensuite un plaquage du filet contre le taraudage et on fixe ce filet en place par pose d'une goupille traversant le filet et engagée dans la paroi de l'ouverture taraudée.

Afin de bien faire comprendre l'invention, on va maintenant décrire, à titre d'exemple, en se référant aux figures jointes en annexe, des outillages permettant la mise en oeuvre du procédé suivant l'invention et un mode de réalisation de ce procédé, dans le cas de la réparation du taraudage d'une ouverture usinée dans la bride de fixation du couvercle de la cuve d'un réacteur nucléaire à eau sous pression.

La figure 1 est une vue en coupe par un plan vertical de symétrie d'une ouverture taraudée usinée dans la bride de fixation du couvercle d'une cuve d'un réacteur nucléaire à eau sous pression.

La figure 2 est une vue en élévation latérale d'un filet rapporté destiné à la réparation du taraudage de l'ouverture représentée sur la figure 1.

La figure 3 est une vue de dessus suivant 3 de la figure 2.

La figure 4 est une vue en coupe transversale du filet rapporté représenté sur la figure 2.

La figure 5 est une vue en perspective d'un outillage permettant le centrage et l'introduction par vissage du filet rapporté dans l'ouverture taraudée.

La figure 6 est une vue en coupe par un plan vertical de symétrie, de l'outillage représenté sur la figure 5.

La figure 7 est une vue en élévation latérale d'un outillage permettant de réaliser le plaquage du filet rapporté dans l'ouverture taraudée.

Les figures 8A et 8B sont des vues en coupe par un plan vertical de la partie supérieure et de la partie inférieure de l'outillage représenté sur la figure 7, respectivement.

La figure 9 est une vue en coupe par un plan vertical d'un outillage permettant de réaliser le perçage du filet rapporté et de la paroi de l'ouverture taraudée, pour effectuer la mise en place d'une goupille de fixation du filet rapporté.

La figure 10 est une vue de détail de l'extrémité du filet rapporté dans laquelle est engagée la goupille de fixation.

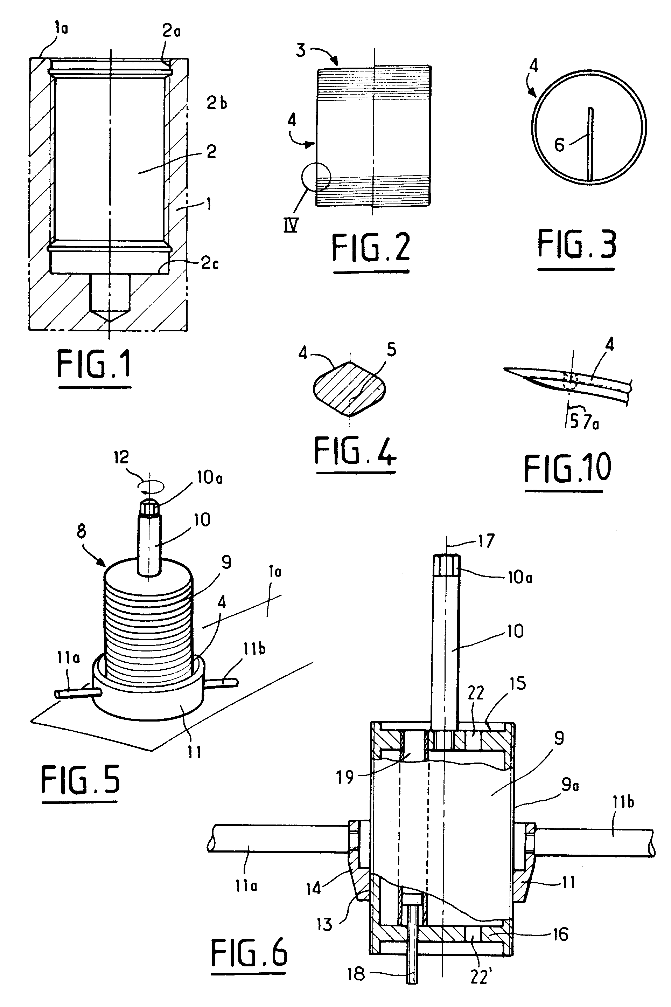

Sur la figure 1, on voit une partie 1 de la bride supérieure d'une cuve d'un réacteur nucléaire à eau sous pression dans laquelle est usinée une ouverture 2 débouchant sur la surface supérieure la de la bride de cuve constituant le plan de joint du couvercle de cuve.

L'ouverture 2 réalisée sous la forme d'un trou borgne comporte une partie d'entrée lisse 2a permettant de faciliter l'introduction d'un goujon de serrage, une partie taraudée 2b et un fond de trou 2c constituant l'extrémité du perçage de la bride de cuve.

Le taraudage 2b de l'ouverture 2 présente une certaine usure et des détériorations qui nécessitent la pose d'un filet rapporté.

Sur la figure 2, on a représenté un filet hélicoïdal 4 qui peut être utilisé pour réaliser la réparation du taraudage 2b de l'ouverture 2.

Comme il est visible sur la figure 2, le filet 4 destiné à être rapporté dans l'ouverture 2 est constitué sous la forme d'un enroulement hélicoïdal à spires jointives dont la longueur correspond sensiblement à la longueur du filet du taraudage 2b à réparer.

Sur la figure 3, on voit que le filet rapporté 4 comporte un brin d'extrémité inférieur 6 replié vers l'intérieur, dans une direction sensiblement radiale.

Le filet 4 est réalisé en un matériau dont la dureté est sensiblement supérieure à la dureté de l'acier de la cuve du réacteur.

Sur la figure 4, on voit la section transversale du filet 4 qui présente la forme d'un parallélogramme à angles arrondis, la demi-section du filet délimitée par l'axe de symétrie 5 ayant une forme correspondant à la forme de l'espace ménagé entre les filets du taraudage 2b.

Sur la figure 5, on voit un outil 8 de centrage et d'introduction d'un filet rapporté 4 dans une ouverture taraudée telle que l'ouverture 2, en position de travail sur la surface supérieure 1a d'une bride de cuve.

L'outil 8 comporte un tambour 9 sur lequel est enroulé le filet 4, une tige 10 solidaire du tambour 9 montée suivant l'axe de ce tambour et un anneau de centrage 11 solidaire de poignées de maintien 11a, 11b de direction radiale.

La tige 10 comporte, à son extrémité supérieure, une partie profilée 10a sur laquelle peut être engagé un outil permettant de faire tourner la tige 10 et le tambour 9 autour de leur axe commun, comme indiqué par la flèche 12. La partie profilée 10a peut présenter avantageusement une forme prismatique à base hexagonale, l'entraînement en rotation de la tige 10 étant assuré grâce à une clé telle qu'une clé de serrage de vis ou écrou.

Sur la figure 6, on voit que le tambour 9 de l'outil 8 comporte, sur sa surface externe, un filetage 9a qui permet l'engagement du tambour 9 à l'intérieur d'une partie taraudée 13 de l'alésage interne de l'anneau de centrage 11.

Le filetage 9a permet d'assurer le maintien du filet rapporté 4 sur la surface extérieure du tambour 9, le filet 4 étant engagé et enroulé sur le tambour 9, préalablement à son introduction dans l'ouverture taraudée 2.

De plus, le filetage 9a est tronqué, de manière que l'ensemble constitué par le tambour 9 et le filet 4 enroulé sur ce tambour puisse être engagé par vissage dans le taraudage 13 de la bague de centrage 11.

La bague de centrage 11 comporte une partie d'engagement tronconique 14 qui peut être introduite dans la partie d'entrée 2a de l'ouverture 2 et maintenue en position grâce aux poignées 11a et 11b.

Dans la position d'engagement de l'anneau de centrage 11, le taraudage 13 vient se placer dans le prolongement du taraudage 2b de l'ouverture 2.

Le tambour 9 comporte de plus un flasque supérieur 15 sur lequel est fixée la tige 10 et un flasque inférieur 16 dans lequel est engagée, dans une position parallèle à l'axe 17 du tambour, et dans une position excentrée, une vis 18, à l'intérieur d'une ouverture taraudée traversant le flasque 16.

Pour effectuer l'introduction du filet rapporté 4 à l'intérieur de l'ouverture taraudée 2, l'anneau de centrage 11 est mis en place sur l'ouverture 2, de manière que son extrémité tronconique 14 soit engagée dans la partie d'entrée 2a de l'ouverture 2. Un opérateur maintient l'anneau de centrage 11 en place sur la partie d'entrée de l'ouverture 2, grâce aux poignées 11a et 11b. Eventuellement, on peut utiliser un dispositif de maintien de l'anneau de centrage sur la bride de cuve fixé dans des trous taraudés adjacents à l'ouverture 2.

On réalise l'introduction et le vissage du tambour 9 sur lequel est enroulé le filet 4, dans l'alésage taraudé 13 de l'anneau de centrage 11 maintenu fixe par rapport à la bride de cuve. Le vissage du tambour 9 est assuré par l'intermédiaire de l'extrémité supérieure 10a de la tige 10 sur laquelle est engagé un outil tel qu'une clé de serrage.

Pendant la rotation du tambour, comme schématisé par la flèche 12 sur la figure 5, la vis 18 vient en appui sur le brin 6 à l'extrémité inférieure du filet 4 pour assurer son maintien et son entraînement pendant la rotation du tambour 9.

La rotation du tambour 9 assure le vissage du filet rapporté 4, d'abord à l'intérieur de l'alésage taraudé 13 de l'anneau de centrage 11 puis à l'intérieur du taraudage 2b de l'ouverture 2 placé dans le prolongement du taraudage 13.

Le filet 4 est ainsi engagé progressivement à l'intérieur du taraudage 2b de l'ouverture 2, de manière que sa partie externe soit introduite dans l'espace ménagé entre les filets du taraudage 2b.

La position de la vis 18 par rapport au flasque 16 est réglée de manière que l'extrémité de cette vis vienne buter sur le fond 2c de l'ouverture 2, lorsque le filet rapporté 4 est entièrement engagé à l'intérieur du taraudage 2b.

La mise en place du filet rapporté 4 à l'intérieur de l'ouverture 2 est alors terminée. On déplace la vis 18 de manière qu'elle ne vienne plus en prise avec le brin d'extrémité 6 ou on casse le brin d'extrémité 6 du filet rapporté 4 en introduisant un outil par des ouvertures alignées prévues dans les plaques 15 et 16 puis on extrait le tambour 9 de l'ouverture 2, par mise en rotation du tambour, dans le sens inverse du vissage. Le brin 6 qui n'est plus entraîné par la vis 18 reste en place dans l'ouverture 2, le filetage 9a du tambour se déplaçant par glissement sur le filet rapporté 4.

Dans le cas où l'on réalise un déplacement axial de la vis 18 pour la faire échapper au brin 6, on peut utiliser un tube 19 de guidage d'un outil de vissage et de dévissage destiné à venir en prise avec la tête de vis, disposé dans une direction axiale à l'intérieur du tambour 9. Dans le cas où l'on casse le brin 6, on prévoit des ouvertures telles que 22 et 22′ pour l'introduction d'un outil à l'intérieur de l'ouverture 2.

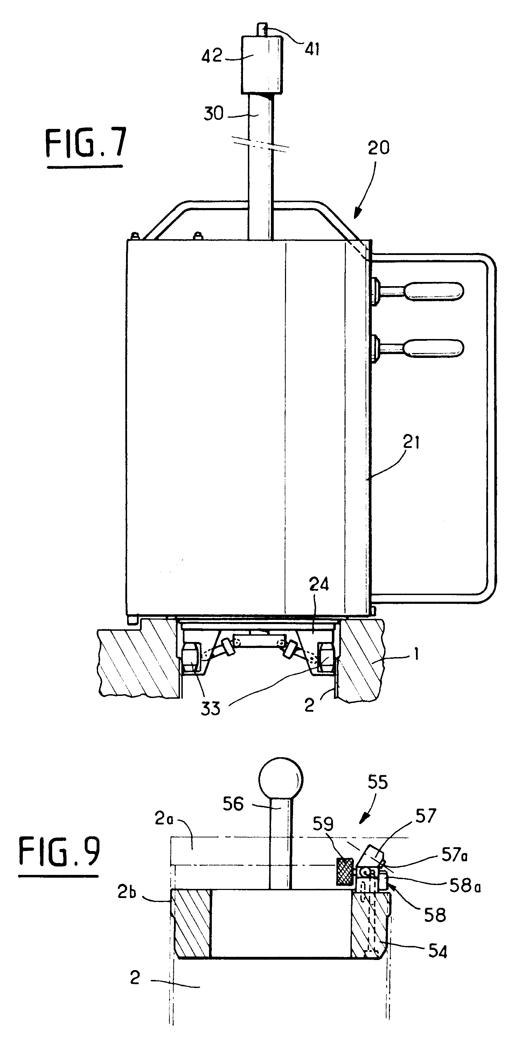

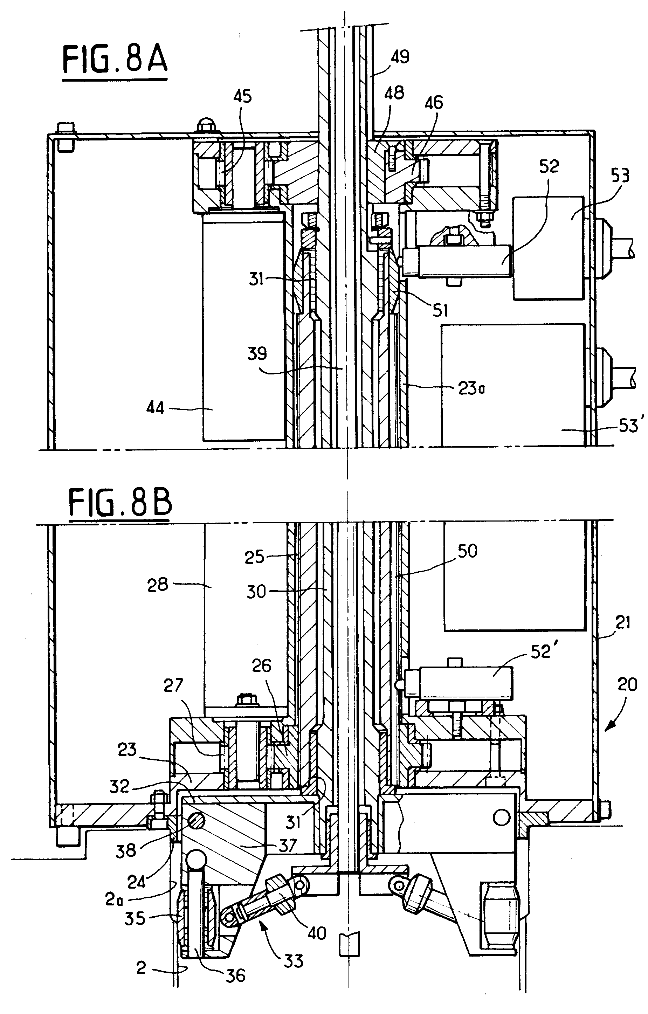

On effectue ensuite le plaquage du filet rapporté 4, dans le fond de filet du taraudage 2b, en utilisant l'outillage représenté sur les figures 7, 8, 8A et 8B et désigné de manière générale par le repère 20.

Comme il est visible sur les figures 7, 8, 8A et 8B, le dispositif 20 comporte à l'intérieur d'un capot 21, un support 23 à la partie inférieure duquel est fixée une embase 24 permettant de mettre en place l'outillage 20, dans une position centrée à l'entrée de l'ouverture taraudée 2 dans laquelle on a réalisé l'introduction du filet rapporté.

Le support 23 comporte une partie centrale tubulaire 23a coaxiale à l'embase 24 et disposée coaxialement à l'ouverture taraudée 2, lorsque le dispositif 20 est en position de service.

A l'intérieur de la partie tubulaire 23a du support, est montée dans une position coaxiale, une vis 25 ayant un fût tubulaire et engrènant avec un écrou 26 entraîné en rotation par un pignon 27 monté sur l'arbre de sortie d'un moteur 28 porté par le support 23.

Un tube 30 est monté, dans une disposition coaxiale, à l'intérieur du fût de la vis 25, par l'intermédiaire de paliers 31. Le tube 30 est monté rotatif à l'intérieur du fût de la vis 25 et comporte une partie supérieure en saillie par rapport à l'extrémité supérieure du capot 21.

Le tube 30 porte, à son extrémité inférieure, par l'intermédiaire d'un support 32, l'ensemble de galetage 33 de l'outillage 20 permettant d'effectuer le plaquage du filet rapporté à l'intérieur du trou taraudé 2.

L'outillage 33 comporte quatre galets tels que le galet 35 montés rotatifs autour d'un axe 36, sur un support 37 monté pivotant autour d'un axe 38 sur le support 32.

A l'intérieur du tube 30 est placée, dans une disposition coaxiale, une tige d'actionnement tubulaire 39 reliée à sa partie inférieure, par l'intermédiaire de biellettes 40, au support 37 des galets 35.

La partie supérieure 41 de la tige tubulaire 39 est graduée de manière qu'on puisse repérer la position de cette tige 39 par rapport à un écrou moleté 42 monté rotatif et en appui sur la partie d'extrémité supérieure du tube 30 et permettant de déplacer la tige 39 axialement.

La tige de réglage 39 peut être déplacée grâce à l'écrou moleté 42 de manière à assurer le réglage des galets 35 dans la direction radiale, par l'intermédiaire des biellettes 40. On peut ainsi régler l'écartement diamétral des galets et la pression de plaquage du filet rapporté à l'intérieur de l'ouverture taraudée 2.

Le support 23 de l'outillage porte de plus un moteur 44 dont l'arbre de sortie porte un pignon d'entraînement 45 engrènant avec une couronne dentée 46. Le tube 30 est monté à l'intérieur de la couronne dentée 46, de manière qu'il soit solidaire en rotation de la couronne 46 et mobile en translation axiale, grâce à une clavette 48 engagée dans une rainure longitudinale 49 usinée dans la paroi du tube 30.

Une rainure longitudinale 50 est usinée dans la paroi de la vis tubulaire 25 qui porte une butée 51 destinée à coopérer avec des contacteurs de fin de course 52 et 52′ permettant de limiter le déplacement axial de l'outillage de plaquage.

Le dispositif 20 comporte également un distributeur pneumatique 53 comportant une poignée de commande à l'extérieur du capot 21 et un distributeur 53′ comportant également une poignée de commande à l'extérieur du capot.

Le distributeur pneumatique 53 permet d'assurer la commande du moteur pneumatique 44 et le distributeur 53′ assure la commande du moteur 28.

La mise en rotation du moteur 44 assure, par l'intermédiaire du pignon 45 et de la couronne 46, la mise en rotation du tube 30 et de l'ensemble de galetage 33.

La mise en rotation du moteur 28 permet de déplacer, dans la direction axiale, l'ensemble de galetage 33, par l'intermédiaire du pignon 27, de l'écrou 26 et de la vis 25.

La position radiale des galets 35 est réglée grâce au bouton moleté 42.

Après qu'on ait mis en place le filet rapporté à l'intérieur de l'ouverture taraudée 2, comme décrit précédemment, on met en place l'outillage de plaquage 20 à l'extrémité d'entrée de l'ouverture taraudée 2, dans une disposition coaxiale, comme représenté sur les figures 7 et 8B.

L'ensemble de galetage 33 est dans une position haute et se trouve légèrement saillant par rapport à l'embase de centrage 24. Les galets viennent se placer à l'intérieur de la partie d'entrée de l'ouverture taraudée 2 et leur disposition radiale est réglée grâce à l'écrou moleté 42, de manière qu'ils puissent effectuer un plaquage efficace du filet rapporté en fond de filet, à l'intérieur du taraudage 2b de l'ouverture 2. On commande la mise en rotation de l'outillage de plaquage à l'aide du distributeur 53.

On commande le mouvement de descente de l'ensemble de galetage 33 grâce au distributeur 53′.

L'ensemble de galetage 33 se déplace, suivant un mouvement hélicoïdal, à l'intérieur de l'ouverturee 2, de manière à réaliser le plaquage du filet rapporté, sur toute sa longueur.

Lorsque l'outil de plaquage est parvenu à la partie inférieure du filet rapporté, la butée 51 actionne le contacteur de fin de course 52′, afin d'arrêter le mouvement de descente.

On commande alors le déplacement de l'ensemble de galetage 33 dans le sens de la montée, par l'intermédiaire du distributeur 53′, en le faisant tourner dans le sens inverse du sens précédent.

L'outil de galetage revient dans sa position haute représentée sur les figures 7 et 8.

On a ainsi réalisé un plaquage efficace du filet rapporté à l'intérieur du taraudage 2b.

On sépare l'outillage de plaquage 20 de la bride 1 puis on met en place à l'intérieur du trou 2 un dispositif de guidage tel que représenté sur la figure 9, permettant de réaliser un perçage dans une disposition et une orientation parfaitement définie, de l'extrémité du filet rapporté et de la paroi de l'ouverture taraudée 2.

Le dispositif de guidage 55 représenté sur la figure 9 comporte une bague 54 filetée extérieurement et solidaire d'une poignée 56.

Le filetage externe de la bague 54 permet sa mise en place par vissage, à l'intérieur du taraudage 2b du trou 2 dans lequel le filet rapporté a été mis en place et plaqué précédemment.

La bague 54 porte sur sa surface supérieure un canon de perçage 57 monté sur une platine 58 dont la position dans la direction radiale, à l'intérieur de l'ouverture 2, est réglable grâce à un bouton moleté 59.

Pour effectuer le perçage du filet rapporté et de la paroi du trou taraudé 2 dans une position et dans une orientation voulues, la bague filetée 54 est introduite dans le trou 2 par son extrémité d'entrée 2a et vissée à l'intérieur de la partie taraudée 2b en utilisant la poignée 56, jusqu'au moment où la platine 58 et le canon de perçage 57 se trouvent dans une position telle que l'extrémité 58a de la platine 58 se trouve en vis-à-vis de l'extrémité supérieure du filet rapporté 4 engagé et plaqué à l'intérieur du taraudage 2b. La position de la platine 58 et du canon de perçage 57 est réglée en actionnant le bouton moleté 59 jusqu'au moment où l'extrémité 58a de la platine 58 vient en butée contre le filet 4 dont elle réalise le plaquage contre le taraudage. L'axe de perçage 57a du canon 57 est alors placé de manière qu'on puisse réaliser manuellement le perçage en utilisant une perceuse autonome.

Comme il est visible sur la figure 10, on effectue un perçage traversant de l'extrémité du filet rapporté 4 et de la paroi de l'ouverture 2 dans sa partie taraudée 2b, suivant l'axe 57a.

Une goupille de dimension adaptée est introduite dans le perçage de manière à réaliser la fixation du filet rapporté 4 dans le taraudage 2b, puis meulée et arasée.

La réparation du taraudage de l'ouverture 2 est alors terminée, si bien qu'on peut utiliser cette ouverture taraudée pour la fixation du couvercle de cuve, en introduisant un goujon ayant une partie filetée de forme et de dimensions voulues, à l'intérieur du taraudage dont on a effectué la réparation.

Le filet rapporté étant réalisé en un matériau d'une dureté sensiblement supérieure à la dureté du matériau constituant la cuve du réacteur et le goujon, le vissage du goujon peut être effectué sans risque de grippage, les filets en contact glissant parfaitement les uns sur les autres. En cas de détérioration d'un filet, il suffit de remplacer le filet rapporté de la manière qui a été décrite ci-dessus. Le démontage du filet détérioré peut être réalisé manuellement sans difficulté.

Le procédé suivant l'invention est d'une mise en oeuvre simple et permet de réaliser une réparation parfaitement efficace.

La pose du filet rapporté suivant l'invention permet donc de réduire considérablement la difficulté et la durée des opérations de maintenance liées au démontage et au remontage du couvercle de cuve et d'augmenter de manière sensible la sécurité de fonctionnement du réacteur, grâce à un meilleur comportement de l'assemblage mécanique du goujon et du taraudage de la cuve.

L'invention ne se limite pas au mode de réalisation qui a été décrit.

Le filet rapporté peut être réalisé en tout matériau dont les caractéristiques mécaniques sont satisfaisantes, quelle que soit sa compatibilité chimique avec l'acier de la cuve et quelle que soit sa soudabilité, dans la mesure où le procédé suivant l'invention ne met en oeuvre aucune opération de soudage ou même de brasage.

Enfin, le procédé et le dispositif de pose suivant l'invention peuvent être utilisés pour réaliser la pose d'un filet rapporté hélicoïdal dans une ouverture taraudée de grand diamètre aussi bien dans le cadre de la réparation d'une cuve de réacteur nucléaire et pour la réparation de tout autre composant nucléaire ou plus généralement de tout composant d'une installation industrielle comportant des ouvertures taraudées de grand diamètre, dont le diamètre nominal est par exemple compris entre 150 et 250 mm.

## Revendications

1. Procédé de pose d'un filet rapporté hélicoïdal (4) dans une ouverture taraudée (2) de grand diamètre pour effectuer la réparation du taraudage (2b) de l'ouverture (2), dans lequel on introduit par vissage le filet rapporté (4) dans l'ouverture taraudée (2), enroulé sur une partie filetée (9a) de la surface d'un tambour (9) dont on assure le vissage à l'intérieur d'un anneau de centrage taraudé (11) engagé dans la partie d'entrée (2a) de l'ouverture taraudée (2), de manière à constituer un prolongement du taraudage (2b) de l'ouverture (2), caractérisé par le fait qu'on effectue ensuite un plaquage du filet (4) contre le taraudage (2b) et qu'on fixe en place le filet (4) par pose d'une goupille traversant le filet (4) et engagée dans la paroi de l'ouverture taraudée (2).

2. Procédé de pose suivant la revendication 1, caractérisé par le fait que le filet rapporté (4) est constitué en un matériau dont la dureté est sensiblement supérieure à la dureté du matériau constituant la paroi de l'ouverture taraudée (2).

3. Procédé suivant l'une quelconque des revendications 1 et 2, caractérisé par le fait que le filet rapporté (4) est constitué par un enroulement à spires jointives dont la longueur correspond sensiblement à la longueur du filet du taraudage (2b) dont on réalise la réparation.

4. Procédé suivant l'une quelconque des revendications 1, 2 et 3, caractérisé par le fait que le filet rapporté (4) comporte un brin d'extrémité (6) replié vers l'intérieur du filet dans une disposition sensiblement radiale, permettant d'assurer l'entraînement et la retenue du filet (4), pendant son introduction dans l'ouverture taraudée (2).

5. Procédé suivant l'une quelconque des revendications 1 à 4, caractérisé par le fait que le filet (4) présente une section transversale ayant la forme d'un parallélogramme à angles arrondis.

6. Dispositif de pose d'un filet rapporté hélicoïdal (4) dans une ouverture taraudée (2) de grand diamètre pour effectuer la réparation du taraudage (2b) de l'ouverture (2), le filet rapporté (4) étant introduit par vissage dans l'ouverture taraudée (2), comportant un outillage d'introduction du filet rapporté (4) dans l'ouverture taraudée (2) comprenant un tambour (9) ayant une surface extérieure filetée et une bague de centrage (11) comportant une partie (14) d'engagement dans une partie d'entrée (2a) de l'ouverture taraudée (2), caractérisé par le fait que le tambour (9) comporte un premier flasque d'extrémité (15) sur lequel est fixé, dans une disposition axiale, une tige (10) d'entraînement en rotation du tambour (9) autour de son axe, par l'intermédiaire d'une partie profilée (10a) et un second flasque (16) sur lequel est fixée, dans une direction axiale et dans une disposition décentrée, une vis (18) engagée dans une ouverture taraudée traversant le flasque (16) dont la position de l'extrémité située à l'extérieur du tambour (9) peut être réglée dans la direction axiale.

7. Dispositif suivant la revendication 6, caractérisé par le fait qu'il comporte un tube (19) de guidage d'un outil de vissage et de dévissage de la vis (18) fixé à l'intérieur du tambour (9) dans une direction axiale.

8. Dispositif suivant la revendication 6, caractérisé par le fait que les flasques (15, 16) sont traversés par des ouvertures (22, 22') permettant le passage d'un outil de cassage d'un brin (6) d'entraînement en rotation du filet rapporté (4) par la vis (18) solidaire du tambour (9).

9. Dispositif suivant l'une quelconque des revendications 6 à 8, caractérisé par le fait que le filetage (9a) usiné sur la surface extérieure du tambour (9) comporte un filet tronqué.

10. Dispositif suivant l'une quelconque des revendications 6 à 9, caractérisé par le fait que l'anneau de centrage (11) comporte au moins deux poignées de maintien (11a, 11b) à l'intérieur de l'ouverture (2).

11. Utilisation d'un procédé ou d'un dispositif suivant l'une quelconque des revendications 1 à 10, pour la réparation du taraudage (2b) d'une ouverture taraudée (2) d'une bride supérieure de la cuve d'un réacteur nucléaire à eau sous pression destinée à recevoir le couvercle de cuve qui est fixé par l'intermédiaire de goujons introduits dans des ouvertures taraudées telles que l'ouverture (2).

## Claims

1. Process for positioning an added-on helical thread (4) in a tapped opening (2) of large diameter in order to repair the tapping (2b) of the opening (2), wherein the added-on thread (4) is inserted into the tapped opening (2) by screwing, wrapped round a threaded portion (9a) of the surface of a drum (9) which is screwed into a tapped centering ring (11) engaging in the inlet portion (2a) of the tapped opening (2), so as to form an extension of the tapping (2b) of the opening (2), characterised in that the thread (4) is then applied to the tapping (2b) and the thread (4) is fixed in position by the insertion of a pin passing through the thread (4) and engaging in the wall of the tapped opening (2).

2. Positioning process according to claim 1, characterised in that the added-on thread (4) consists of a material having a substantially greater hardness than the material which constitutes the wall of the tapped opening (2).

3. Process according to any one of claim 1 and 2, characterised in that the added-on thread (4) consists of a winding with adjacent turns the length of which corresponds substantially to the length of the thread of the tapping (2b) which is being repaired.

4. Process according to any one of claims 1, 2 and 3, characterised in that the added-on thread (4) comprises an end strand (6) turned towards the inside of the thread in a substantially radial arrangement, allowing the thread (4)to be driven and held in position while it is being inserted in the tapped opening (2).

5. Process according to any one of claims 1 to 4, characterised in that the thread (4) has a cross section in the form of a parallelogram with rounded corners.

6. Apparatus for positioning an added-on helical thread (4) in a tapped opening (2) of large diameter in order to repair the tapping (2b) of the opening (2), the added-on thread (4) being inserted into the tapped opening (2) by screwing, comprising an insertion tool for inserting the added-on thread (4) in the tapped opening (2) comprising a drum (9) having a threaded outer surface and a centering ring (11) comprising a part (14) engaging in an inlet portion (2a) of the tapped opening (2), characterised in that the drum (9) has a first end flange (15) to which is fixed, in an axial arrangement, a rod (10) for rotationally driving the drum (9) about its axis, via a profiled portion (10a), and a second flange (16) on which is fixed, in an axial direction and in an off-centre arrangement, a screw (18) engaging in a tapped opening passing through the flange (16) the end position of which, located outside the drum (9), can be regulated in the axial direction.

7. Apparatus according to claim 6, characterised in that it comprises a tube (19) for guiding a screwing and unscrewing tool for the screw (18), fixed inside the drum (9) in an axial direction.

8. Apparatus according to claim 6, characterised in that the flanges (15, 16) are pierced with openings (22, 22') which allow a tool to be passed through in order to bred a strand (6) of the added-on thread (4) driven in rotation by the screw (18) fixedly connected to the drum (9).

9. Apparatus according to any one of claims 6 to 8, characterised in that the screw thread (9a) machined on the outer surface of the drum (9) has a truncated thread.

10. Apparatus according to any one of claims 6 to 9, characterised in that the centering ring (11) has at least two gripping handles (11a, 11b) inside the opening (2).

11. Use of a process or an apparatus according to any one of claims 1 to 10, for repairing the tapping (2b) of a tapped hole (2) in an upper flange of the container of a pressurised-water nuclear reactor, intended to receive the container cover which is fixed by means of pins inserted in tapped openings such as the opening (2).

## Patentansprüche

1. Verfahren zum Anbringen eines Gewindeeinsatzes (4) in einer Gewindebohrung (2) mit großem Durchmesser zur Reparatur des Innengewindes (2b) der Bohrung (2), wobei der Gewindeeinsatz (4) in die Gewindebohrung (2) eingeschraubt wird, indem er auf einen Gewindeabschnitt (9a) der Oberfläche einer Trommel (9) gewickelt ist, deren Einschrauben in einen Zentrierring mit Innengewinde (11) gewährleistet ist, welcher sich im Eingangsabschnitt (2a) der Gewindebohrung (2) in Eingriff befindet, dergestalt daß er eine Verlängerung des Innengewindes (2b) der Bohrung (2) bildet,
dadurch gekennzeichnet, daß danach das Gewinde (4) an dem Innengewinde (2b) angebracht wird und das Gewinde (4) an seinem Platz befestigt wird, indem ein Stift angebracht wird, der durch das Gewinde (4) verläuft und in der Wand der Gewindebohrung (2) in Eingriff kommt.

2. Verfahren zum Anbringen nach Anspruch 1,
dadurch gekennzeichnet, daß der Gewindeeinsatz (4) aus einem Material besteht, dessen Härte deutlich größer ist als die Härte des Materials, aus dem die Wand der Gewindebohrung (2) besteht.

3. Verfahren nach einem der Ansprüche 1 und 2,
dadurch gekennzeichnet, daß der Gewindeeinsatz (4) aus einer Wicklung aus nebeneinanderliegenden Windungen besteht, deren Länge im wesentlichen der Länge des Innengewindes (2b) entspricht, dessen Reparatur durchgeführt wird.

4. Verfahren nach einem der Ansprüche 1, 2 und 3,
dadurch gekennzeichnet, daß der Gewindeeinsatz (4) ein Endstück (6) aufweist, das in im wesentlichen radialer Anordnung ins Innere des Gewindes umgebogen ist und mit dem der Antrieb und das Festhalten des Gewindeeinsatzes (4) bei seinem Einführen in die Gewindebohrung (2) gewährleistet werden kann.

5. Verfahren nach einem der Ansprüche 1 bis 4,
dadurch gekennzeichnet, daß der Gewindeeinsatz (4) einen Querschnitt mit der Form eines Parallelogramms mit abgerundeten Ecken aufweist.

6. Vorrichtung zum Anbringen eines Gewindeeinsatzes (4) in einer Gewindebohrung (2) mit großem Durchmesser zur Reparatur des Innengewindes (2b) der Bohrung (2), wobei der Gewindeeinsatz (4) in die Gewindebohrung (2) eingeschraubt wird, bestehend aus einem Werkzeug zum Einführen des Gewindeeinsatzes (4) in die Gewindebohrung (2), das eine Trommel (9) mit einer Außengewindefläche und einen Zentrierring (11) mit einem Abschnitt (14) zum Eingriff in einen Eingangsabschnitt (2a) der Gewindebohrung (2) umfaßt,
dadurch gekennzeichnet, daß die Trommel (9) einen ersten Endflansch (15) aufweist, an dem in axialer Anordnung eine Antriebsstange (10) befestigt ist, um mittels eines Profilabschnitts (10a) die Trommel (9) um ihre Achse zu drehen, sowie einen zweiten Endflansch (16) aufweist, an dem in einer axialen Richtung und in dezentrierter Anordnung eine Schraube (18) befestigt ist, die sich in einer Gewindebohrung durch den Flansch (16) in Eingriff befindet, dessen Endposition außerhalb der Trommel (9) in Achsrichtung verstellt werden kann.

7. Vorrichtung nach Anspruch 6,
dadurch gekennzeichnet, daß sie ein Führungsrohr (19) für ein Werkzeug zum Einschrauben und Ausschrauben der Schraube (18) aufweist, das im Inneren der Trommel (9) in Achsrichtung befestigt ist.

8. Vorrichtung nach Anspruch 6,
dadurch gekennzeichnet, daß durch die Flansche (15, 16) Öffnungen (22, 22') für den Durchlaß eines Werkzeugs zum Zerreißen eines Endstücks (6) verlaufen, das den Gewindeeinsatz (4) mittels der mit der Trommel (9) fest verbundenen Schraube (18) in Drehbewegung versetzt.

9. Vorrichtung nach einem der Ansprüche 6 bis 8,
dadurch gekennzeichnet, daß das in der Außenfläche der Trommel (9) hergestellte Gewinde (9a) ein schräg abgeschnittenes Gewinde aufweist.

10. Vorrichtung nach einem der Ansprüche 6 bis 9,
dadurch gekennzeichnet, daß der Zentrierring (11) mindestens zwei Haltegriffe (11a, 11b) in der Bohrung (2) aufweist.

11. Anwendung eines Verfahrens oder einer Vorrichtung nach einem der Ansprüche 1 bis 10 zur Reparatur des Innengewindes (2b) einer Gewindebohrung (2) eines oberen Flanschs des Gefäßes eines Druckwasser-Kernreaktors, der den Gefäßdeckel aufnehmen soll, der mittels Stiften befestigt wird, die in Gewindebohrungen wie z. B. die Bohrung (2) eingesetzt werden.
